# EUROPÄISCHE PATENTSCHRIFT

(11) **EP 0 461 278 B1**
(45) Veröffentlichungstag und Bekanntmachung des Hinweises auf die Patenterteilung: **20.07.1994**
(21) Anmeldenummer: 90110976.9
(22) Anmeldetag: 11.06.1990
(51) Int. Cl.: G01M 1/04

(54) **Kraftmesseinrichtung**
Force measuring device
Dispositif de mesure de force

(43) Veröffentlichungstag der Anmeldung: 18.12.1991
(73) Patentinhaber: CARL SCHENCK AG, D-64273 Darmstadt (DE)
(72) Erfinder: Heiland, Manfred, D-6100 Darmstadt (DE)
(74) Vertreter: Brandt, Ernst-Ulrich, Dipl.-Phys., Dipl.-Ing.

(56) Entgegenhaltungen:
- DE-B- 1 237 807
- DE-U- 7 801 587
- US-A- 4 406 164

## Beschreibung

Die Erfindung betrifft eine Kraftmeßeinrichtung nach dem Oberbegriff des Patentanspruches 1.
Derartige Kraftmeßeinrichtungen werden beispielsweise als Lagerständer in Auswuchtmaschinen eingesetzt. Eine gattungsgemäße Kraftmeßeinrichtung ist aus der DE-PS 1237807 bekannt. Bei der bekannten Kraftmeßeinrichtung sind die Brücke, die federnden Abstützungen und der Ständer als unlösbare Einheit ausgebildet und der Meßwertaufnehmer ist in einem starr mit dem Ständer verbundenen Seitenteil angeordnet.

Mit der konstruktiven Auslegung einer Kraftmeßeinrichtung gemäß der oben genannten Patentschrift ist der Bereich der zu messenden Kräfte im wesentlichen festgelegt. Allenfalls durch den Einsatz von Kraftmeßdosen mit unterschiedlichem Meßbereich könnte eine Anpassung der Kraftmeßeinrichtung an die zu messenden Kräfte erfolgen. Dies ist ein aus wirtschaftlicher Sicht äußerst unbefriedigendes Verfahren.

Der Erfindung liegt daher die Aufgabe zugrunde, eine gattungsgemäße Kraftmeßeinrichtung zu schaffen, die es ermöglicht, Kräfte von deutlich unterschiedlicher Größenordnung zu messen, ohne daß hierzu der Meßwertaufnehmer ausgetauscht werden muß. Diese Aufgabe wird erfindungsgemäß durch die kennzeichnenden Merkmale des Anspruchs 1 gelöst.

Die Erfindung sieht also vor, durch die Auswahl der Steifigkeit der Verbindung zwischen dem Ständer und der Brücke und der Steifigkeit der Verbindung zwischen dem Ständer und dem Meßwertaufnehmer den Kraftfluß von der Brücke in das Fundament so auf zwei Kraftpfade aufzuteilen, daß die auf den Meßwertaufnehmer wirkende Kraft stets in einem definierten Bereich liegt, wobei vorausgesetzt wird, daß eine in Meßrichtung auf die Brücke wirkende Kraft unterhalb einer spezifizierten Größe bleibt.

Die obengenannten Steifigkeiten können bei einer Baureihe von Kraftmeßeinrichtungen konstruktiv derart festgelegt werden, daß für sämtliche Baugrößen der Baureihe die gleichen Meßwertaufnehmer verwendet werden können, wodurch sich die Lagerhaltung und die Fertigung durch eine besonders hohe Wirtschaftlichkeit auszeichnet.

Bei der Erfindung ist die Steifigkeit der Verbindung zwischen der Brücke und dem Ständer und / oder die Steifigkeit der Verbindung des Meßwertaufnehmers mit dem Fundament variierbar, wodurch die Meßeinrichtung einer bestimmten Baugröße durch Auswechseln von Federn an die zu messende Kraft angepaßt werden kann. Um eine Verfälschung des Meßergebnisses durch Querkraftkomponenten zu vermeiden, ist bei einer bevorzugten Ausführungsform der Erfindung vorgesehen, das in der Verbindung zwischen dem Meßwertaufnehmer und der Brücke ein Stab mit hoher Querelastizität angeordnet ist. Dieser Effekt kann auch durch den Einsatz eines gelenkig gelagerten Stabes erreicht werden.

In der erfindungsgemäßen Kraftmeßeinrichtung ist der Meßwertaufnehmer als Kraftmeßdose ausgeführt. Durch die entsprechende Wahl der Federsteifigkeiten läßt sich sowohl die auf den Meßwertaufnehmer wirkende Kraft als auch die am Meßwertaufnehmer auftretende Verschiebung innerhalb eines vorbestimmten Bereichs halten. Werden als elastische Mittel Blattfedern bzw. Battfederpakete eingesetzt, so läßt sich die Anpassung der Federsteifigkeiten besonders einfach vornehmen. Die erfindungsgemäße Kraftmeßeinrichtung eignet sich besonders für den Einsatz in Auswuchtmarchinen.

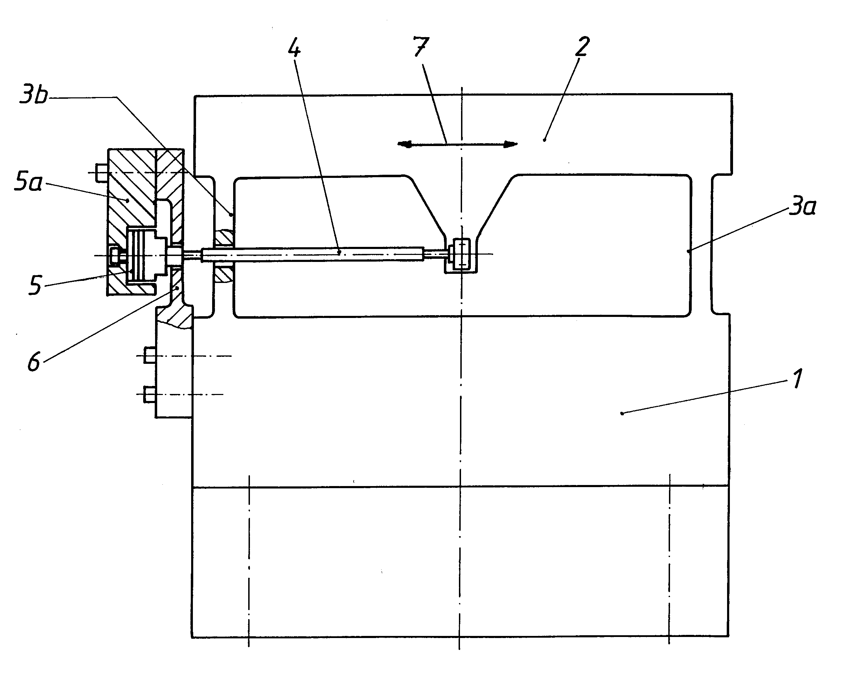

Die Funktion sowie weitere vorteilhafte Merkmale der Erfindung ergeben sich aus der nachstehenden Beschreibung eines Ausführungsbeispiels anhand der Zeichnung.

Die einzige Figur zeigt die Anwendung einer erfindungsgemäßen Kraftmeßeinrichtung bei einer Auswuchtmaschine. Diese setzt sich im wesentlichen aus dem fundamentfesten Ständer 1 und der durch die elastischen Abstützungen 3a, 3b mit ihm verbundenen Brücke 2 zusammen, auf der (nicht dargestellte) Lager zur Aufnahme eines auszuwuchtenden Rotors vorgesehen sind. Die elastischen Abstützungen 3a 3b sind in ihrer Steifigkeit so ausgebildet, daß sie eine Verschiebung der Brücke 2 gegenüber dem Ständer 1 in Meßrichtung (diese ist durch den Doppelpfeil 7 dargestellt) zuläßt. Die Unwucht eines sich drehenden und auf der Brücke 2 gelagerten Rotors führt somit Zu Schwingungen der Brücke 2 in Meßrichtung.

Die Brücke 2 ist über den Stab 4 mit einer Kraftmeßdose 5 verbunden, welche innerhalb eines Aufnehmergehäuses 5a angeordnet ist, das wiederum mittels eines als Blattfeder 6 ausgebildeten Federelementes mit dem Ständer 1 verbunden ist. Die Verbindung ist durch das nach unten Zurückführen des am oberen Ende der Blattfeder 6 befestigten Gehäuses der Kraftmeßdose 5 so ausgeführt, daß eine Krafteinleitung zu einer parallelen Verschiebung der Kraftmeßdose führt. Die Kraftmeßdose ist somit in einem Kraftnebenfluß angeordnet.

Bei der dargestellten Ausführungsform ist die Federsteifigkeit der elastischen Abstützung 3a, 3b konstruktiv vorgegeben, sodaß die Anpassung des Kraftanteils, der durch den Kraftnebenfluß geleitet wird durch Auswahl des entsprechenden Federelementes 6 bestimmt wird. Die Anpassung des Kraftmeßbereiches kann beispielsweise durch den Einsatz von Blattfedern bzw. Blattfederpaketen unterschiedlicher Steifigkeit erfolgen.

Da die Federsteifigkeiten der elastischen Abstützung 3a, 3b den größeren Anteil der Kraft aufzunehmen haben, werden diese im Regelfall bereits konstruktiv vorgegeben. Wenn aus bestimmten Gründen erforderlich, lassen sich in einfacher Weise auch diese Federelemente auswechselbar, insbesondere als Blattfedern gestalten.

Durch die Auswahl der entsprechenden Federsteifigkeiten wird der über den Meßwertaufnehmer geführte Kraftfluß bestimmt.

Der Stab 4 ist derart dimensioniert, daß er keine Querkräfte übertragen kann. Dadurch ist sichergestellt, daß nur Kraftkomponenten in Meßrichtung auf die Kraftmeßdose übertragen werden.

## Patentansprüche

1. Kraftmeßeinrichtung mit einem fundamentfesten Ständer (1) und einer an diesem in eine Meßrichtung (7) elastisch auslenkbar abgestützten Brücke (2), die mit einem Meßwertaufnehmer (5) verbunden ist, dadurch gekennzeichnet, daß der Meßwertaufnehmer (5) elastisch mit dem fundamentfesten Ständer (1) verbunden ist, daß die Steifigkeit der Verbindung (3a, 3b) zwischen der Brücke (2) und dem Ständer (1) und / oder die Steifigkeit der Verbindung (6) des Meßwertaufnehmers (5) mit dem Ständer (1) variierbar ist und daß die Steifigkeit der Verbindung (3a, 3b) zwischen der Brücke (2) und dem Ständer (1) und die Steifigkeit der elastischen Verbindung (6) des Meßwertaufnehmers (5) mit dem Ständer (1) in Meßrichtung derart aufeinander abstimmbar sind, daß die den Meßwertaufnehmer (5) beaufschlagende Kraft unabhängig von der an der Brücke (2) wirkenden Auslenkkraft innerhalb eines vorgebbaren Kraftbereiches liegt, wobei vorausgesetzt ist, daß die in Meßrichtung auf die Brücke wirkende Kraft unterhalb einer spezifizierten Größe bleibt.

2. Kraftmeßeinrichtung nach einem der vorhergehenden Ansprüche, dadurch gekennzeichnet, daß die Verbindung des Meßwertaufnehmers (5) mit dem Ständer (1) und der Brücke (2) mittels jeweils in Reihe geschalteter Einzelfedern erfolgt.

3. Kraftmeßeinrichtung nach einem der vorhergehenden Ansprüche, dadurch gekennzeichnet, daß der Meßwertaufnehmer (5) derart mit einem Ende mindestens einer Blattfeder (6), deren anderes Ende an dem Ständer (1) befestigt ist, verbunden ist, daß der Meßwertaufnehmer (5) bei einer Krafteinleitung im Sinne einer Parallelverschiebung ausgelenkt wird.

4. Kraftmeßeinrichtung nach einem der vorhergehenden Ansprüche, dadurch gekennzeichnet, daß in der Verbindung der Brücke (2) mit dem Meßwertaufnehmer (5) ein Stab (4) mit hoher Querelastizität vorhanden ist.

5. Kraftmeßeinrichtung nach einem der vorhergehenden Ansprüche, dadurch gekennzeichnet, daß in der Verbindung der Brücke (2) mit dem Meßwertaufnehmer (5) ein gelenkig gelagerter Stab (4) vorhanden ist.

6. Kraftmeßeinrichtung nach einem der vorhergehenden Ansprüche, dadurch gekennzeichent, daß der Meßwertaufnehmer (5) als Kraftmeßdose ausgeführt ist, welche die beaufschlagende Kraft mittels Dehnungsmeßstreifen mißt.

7. Kraftmeßeinrichtung nach einem der vorhergehenden Ansprüche, dadurch gekennzeichnet, daß der Meßwertaufnehmer (5) als Piezoelement ausgeführt ist.

8. Kraftmeßeinrichtung nach Anspruch 3, dadurch gekennzeichnet, daß die Blattfeder (6) durch eine lösbare Verbindung am Ständer (1) und am Meßwertaufnehmer (5) befestigt ist.

9. Kraftmeßeinrichtung nach einem der vorhergehenden Ansprüche, dadurch gekennzeichnet, daß die Verbindung zwischen der Brücke (2) und dem Ständer (1) durch mindestens eine austauschbare Blattfeder erfolgt.

10. Verwendung einer Kraftmeßeinrichtung nach einem der vorhergehenden Ansprüche in einer Auswuchtmaschine, wobei die Brücke (2) der Lagerung eines auszuwuchtenden Rotors dient.

## Claims

1. Force measuring device with a column (1), which is rigid with the foundation, and a bridge (2), which is supported on the latter so as to be resiliently deflectable in a measuring direction (7) and is connected to a measuring transducer (5), characterised in that the measuring transducer (5) is resiliently connected to the column (1) which is rigid with the foundation, that the stiffness of the connection (3a, 3b) between the bridge (2) and the column (1) and/or the stiffness of the connection (6) between the measuring transducer (5) and the column (1) is variable, and that the stiffness of the connection (3a, 3b) between the bridge (2) and the column (1) and the stiffness of the resilient connection (6) between the measuring transducer (5) and the column (1) in the measuring direction can be adapted to one another such that the force acting on the measuring transducer (5) lies within a predeterminable force range, irrespective of the deflection force acting on the bridge (2), provided that the force acting on the bridge in the measuring direction remains below a specified magnitude.

2. Force measuring device according to any one of the preceding claims, characterised in that the measuring transducer (5) is connected to the column (1) and the bridge (2) by means of individual springs which are in each case connected in series.

3. Force measuring device according to any one of the preceding claims, characterised in that the measuring transducer (5) is connected to one end of at least one leaf spring (6), the other end of which is secured to the column (1), such that when a force is introduced the measuring transducer (8) is deflected in the sense of a parallel displacement.

4. Force measuring device according to any one of the preceding claims, characterised in that a rod (4) of a high transverse elasticity is comprised in the connection between the bridge (2) and the measuring transducer (5).

5. Force measuring device according to any one of the preceding claims, characterised in that a hinge-mounted rod (4) is comprised in the connection between the bridge (2) and the measuring transducer (5).

6. Force measuring device according to any one of the preceding claims, characterised in that the measuring transducer (5) is formed as a force gauge which measures the applied force by means of wire strain gauges.

7. Force measuring device according to any one of the preceding claims, characterised in that the measuring transducer (5) is formed as a piezoelectric element.

8. Force measuring device according to claim 3, characterised in that the leaf spring (6) is secured to the column (1) and to the measuring transducer (5) by a releasable connection.

9. Force measuring device according to any one of the preceding claims, characterised in that the connection between the bridge (2) and the column (1) is effected by at least one interchangeable leaf spring.

10. Use of a force measuring device according to any one of the preceding claims in a balancing machine, the bridge (2) serving to bear a rotor which is to be balanced.

## Revendications

1. Dispositif de mesure de force, avec un support (1) fixé aux fondations, et un pont (2), soutenu dans un dispositif de mesure (7) de façon à permettre des débattements élastiques et relié à un capteur de valeur de mesure (5), caractérisé en ce que le capteur de valeur de mesure (5) est relié élastiquement au support (1) fixé aux fondations, en ce que la rigidité de la liaison (3a, 3b) entre le pont (2) et le support (1) et/ou la rigidité de la liaison (6) du capteur de valeur de mesure (5) est/sont modifiable(s), et en ce que la rigidité de la liaison (3a, 5a) entre le pont (2) et le support (1) et la rigidité de la liaison élastique (6) entre le capteur de valeur de mesure (5) et le support (1), dans la direction de mesure, peuvent être d'un rapport tel que la force sollicitant le capteur de valeur de mesure (5) est d'une valeur située dans les limites d'une plage de force, pouvant être allouée et indépendante de la force de déformation agissant sur le pont (2), étant supposé que la force agissant sur le pont, dans la direction de mesure, reste inférieure à une valeur spécifique.

2. Dispositif de mesure de force selon la revendication 1, caractérisé en ce que la liaison du capteur de valeur de mesure (5) avec le support (1) et le pont (2) s'effectue chaque fois au moyen de ressorts individuels, montés en série.

3. Dispositif de mesure de force selon l'une des revendications précédentes, caractérisé en ce que le capteur de valeur de mesure (5) est relié par une extrémité au moins d'un ressort à lame (6), dont l'autre extrémité est fixée au support (1), en ce que le capteur de valeur de mesure (5) est déformé, dans le sens d'un déplacement parallèle, en cas d'introduction d'une force.

4. Dispositif de mesure de force selon l'une des revendications précédentes, caractérisé en ce qu'une barre (4) présentant une élasticité transversale élevée est disposée dans la liaison entre le pont (2) et le capteur de valeur de mesure (5).

5. Dispositif de mesure de force selon l'une des revendications précédentes, caractérisé en ce qu'une barre (4) à montage articulé est disposée dans la liaison entre le pont (2) et le capteur de valeur de mesure (5).

6. Dispositif de mesure de force selon l'une des revendications précédentes, caractérisé en ce que le capteur de valeur de mesure (5) est réalisé sous forme de jauge de mesure, opérant une mesure de la force en action au moyen d'une jauge d'extension.

7. Dispositif de mesure de force selon l'une des revendications précédentes, caractérisé en ce que le capteur de valeur de mesure (5) est un piézo-élément.

8. Dispositif de mesure de force selon l'une des revendications précédentes, caractérisé en ce que le ressort à lame (6) est fixé sur le support (1) et sur le capteur de valeur de mesure (5) au moyen d'une liaison démontable.

9. Dispositif de mesure de force selon l'une des revendications précédentes, caractérisé en ce que la liaison entre le pont (2) et le support (1) s'effectue à l'aide d'au moins un ressort à lame, pouvant être changé.

10. Utilisation d'un dispositif de mesure de force selon l'une des revendications précédentes, dans une machine d'équilibrage, le pont (2) servant au montage de tourillonnement d'un rotor à équilibrer.
